# EUROPÄISCHE PATENTSCHRIFT

(11) **EP 1 034 362 B1**
(45) Veröffentlichungstag und Bekanntmachung des Hinweises auf die Patenterteilung: **13.08.2003**
(21) Anmeldenummer: 99948852.1
(22) Anmeldetag: 24.09.1999
(51) Int. Cl.: F01P 7/16, G05D 23/13

(54) **IM KÜHLKREISLAUF EINER BRENNKRAFTMASCHINE ANGEORDNETES THERMOSTATVENTIL**
THERMOSTATIC VALVE ARRANGED IN A COOLING CIRCUIT OF AN INTERNAL COMBUSTION ENGINE
SOUPAPE THERMOSTATIQUE MONTEE DANS LE CIRCUIT DE REFROIDISSEMENT D'UN MOTEUR A COMBUSTION INTERNE

(30) Priorität: 29.09.1998 DE 19844711
(43) Veröffentlichungstag der Anmeldung: 13.09.2000
(73) Patentinhaber: Bayerische Motoren Werke Aktiengesellschaft, 80809 München (DE); Behr Thermot-tronik GmbH & Co., 70806 Kornwestheim (DE)
(72) Erfinder: LEMBERGER, Heinz, D-85774 Unterföhring (DE); LEU, Peter, D-73760 Ostfildern-Nellingen (DE); KURZ, Manfred, D-71254 Ditzingen (DE)
(86) Internationale Anmeldenummer: EP9907112
(87) Internationale Veröffentlichungsnummer: WO00019069

(56) Entgegenhaltungen:
- WO-A-96/19762
- US-A- 4 666 081
- US-A- 5 582 138

## Beschreibung

Die Erfindung bezieht sich nach dem Oberbegriff des Patentanspruches 1 auf ein im Kühlkreislauf einer Brennkraftmaschine angeordnetes Thermostatventil, bei dem ein einerseits kalt und andererseits heiß beaufschlagtes Hauptventil temperaturabhängig betätigt ist über ein Dehnstoffelement, das über einen heiß- bzw. mischkammerseitig aus-/einfahrbaren Steuerstift mit dem Hauptventil in Hubantriebsverbindung steht, und das andererseits über eine einen Dehnstoff bevorratende Kapsel gegen ein Widerlager in einem kalt- bzw. kühlerrücklaufseitigen Anschlußstutzen des Thermostatventils fest abgestützt ist, wobei die bei geschlossenem Hauptventil kaltseitig überstehende, das Hauptventil mit Bewegungsspiel durchsetzende Kapsel einen im Dehnstoff plazierten elektrischen Schichtwiderstand als Heizelement umfaßt, und der Schichtwiderstand in der wärmeisoliert gegen das kalt beaufschlagte Widerlager abgestützten Kapsel über im Widerlager angeordnete Anschlußleitungen gesteuert/geregelt bestromt ist.

Ein derartiges Thermostatventil ist Gegenstand der PCT/EP95/05053 mit der internationalen Veröffentlichungsnummer WO96/19762. Bei diesem Thermostatventil ist zur Reduzierung des Einflusses des Kaltwassers bei geschlossenem Hauptventil vorgesehen, daß die den Dehnstoff bevorratende Kapsel des Dehnstoffelementes bis in den Abstützbereich an dem kalt beaufschlagten Widerlager vom heißen Kühlmittel aus der Mischkammer des Thermostaten beaufschlagt ist. Zusätzlich ist bei diesem Thermostatventil im Abstützbereich ein Feinwiderstand als Heizelement in Dünnschichtausbildung vorgesehen. Weiter ist die das Dehnstoffelement kaltseitig umschließende Heißwasserkammer gegenüber dem Kaltwasser isoliert ausgebildet.

Nachteilig bei diesem Thermostatventil ist der relativ hohe bauliche Aufwand zur Reduzierung des Einflusses des Kaltwassers bei geschlossenem Hauptventil.

Aus dem DE 295 00 897 U ist ein Thermostatventil bekannt, bei dem der Kaltwassereinfluß auf das Dehnstoffelement zur Gänze dadurch ausgeschlossen ist, daß dieses zusätzlich elektrisch beheizbare Dehnstoffelement in der ständig zumindest von warmen Kühlmittel der Brennkraftmaschine durchströmten Mischkammer angeordnet ist. Diese Ausgestaltung des Thermostatventils mit einem Hauptventil und einem Kurzschlußventil erscheint jedoch bau- und platzaufwendig.

Der Erfindung liegt die Aufgabe zugrunde, ein gattungsgemäßes Thermostatventil unter Beibehaltung des beschriebenen Aufbaues derart zu verbessern, daß bei geschlossenem Hauptventil der Kaltwassereinfluß auf das Dehnstoffelement wesentlich reduziert ist.

Diese Aufgabe ist mit dem Patentanspruch 1 dadurch gelöst, daß die Kapsel einen den Dehnstoff auf Höhe des Hauptventils oder mischkammerseitig tiefer begrenzenden Abschluß aufweist, an dem relativ zum Steuerstift koaxial benachbart angeordnet ein ring- oder hülsenförmiges Heizelement vorgesehen ist oder über den Umfang des Steuerstiftes benachbart verteilt vereinzelte Heizelemente vorgesehen sind.

Zwar ist aus der DE 1 576 699 A ein Thermostatventil mit einem kalt beaufschlagten Hauptventil im geschlossenen Zustand bekannt, bei dem das Dehnstoffelement derart ausgebildet ist, daß der in der Dehnstoff-Kapsel bevorratete Dehnstoff bei geschlossenem Hauptventil im wesentlichen unterhalb dieses Hauptventils und somit ausschließlich mischkammerseitig bevorratet ist und dadurch der Kaltwassereinfluß wesentlich reduziert ist. Dieses Dehnstoffelement zeigt jedoch keine elektrische Heizeinrichtung.

Im übrigen ist aus der DE 1 476 445 A ein Thermostatventil mit einem Dehnstoffelement bekannt, bei dem der Dehnstoffspiegel in der Dehnstoff-Kapsel mischkammerseitig besonders tief gegenüber dem Hauptventil angeordnet ist.

Weiter ist aus der EP 0 838 580 A ein Thermostatventil mit kaltseitig beaufschlagten Hauptventil bekannt, bei dem im Dehnstoffelement von der kalt beaufschlagten Seite entfernt im Mischkammerbereich ein elektrisches Heizelement vorgesehen ist. Mit dieser Anordnung ist bei gleicher elektrischer Leistung des Heizelementes ein schnelleres und genaueres Regeln möglich. Nachteilig bei dieser Ausgestaltung ist jedoch, daß die Anschlußleitungen zur Zuführung der elektrischen Energie durch das heiße Kühlmittel dem beweglichen Ende des kaltseitig abgestützten Dehnstoffelementes zugeführt sind. Eine aufwendige Kabelführung zur Vermeidung von Kabelbrüchen ist hierbei unerläßlich.

Somit stellt die erfindungsgemäße Kombination eines mischkammerseitig relativ tiefen Dehnstoffspiegels in der Kapsel in Verbindung mit einem im Bereich der Mischkammer dem Steuerstift nah benachbarten Heizelement eine glückliche Kombination zu einer im Aufbau einfacheren Weiterbildung des gattungsgemäßen Thermostatventils dar.

Die überraschenderweise durch eine glückliche Kombination für sich bekannter Merkmale gefundene Erfindung ist in ihrer weiteren Ausbildung in Unteransprüchen beschrieben.

Die Erfindung ist anhand einer Zeichnung näher beschrieben. Es zeigt
- Figur 1: ein Thermostatventil im Schnitt,
- Figur 2: eine weitere Variante einer Heizelement-Anordnung.

In einem nicht dargestellten Kühlkreislauf einer nicht näher gezeigten Brennkraftmaschine ist ein Thermostatventil 1 angeordnet, dem gemäß Pfeil "A" von einem Kühler kommendes kaltes Kühlmittel zugeführt ist, dem ferner gemäß Pfeil "B" aus der Brennkraftmaschine abfließendes heißes Kühlmittel zugeführt ist, wobei je nach Stellung eines Hauptventils 2 des Thermostatventils 1 das gemäß dem Pfeil "B" zufließende Kühlmittel gemäß Pfeil "C" der Brennkraftmaschine ohne Änderung der Kühlmitteltemperatur zugeführt ist oder aber mit dem gemäß Pfeil "A" kaltem Kühlmittel gemischt gemäß Pfeil "C'" der Brennkraftmaschine zugeleitet ist.

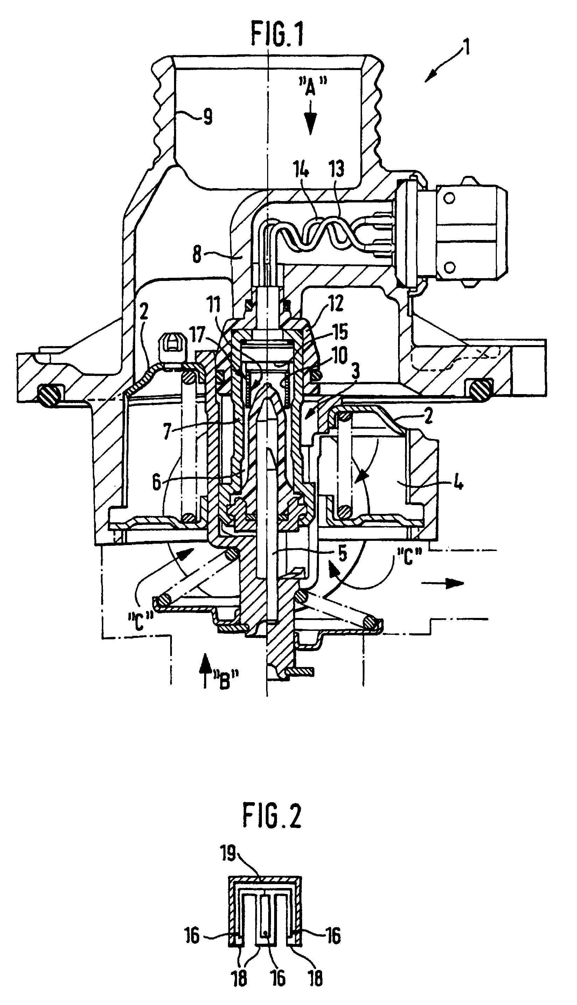

Das Thermostatventil 1 weist somit ein einerseits kalt und andererseits heiß beaufschlagtes Hauptventil 2 auf, das über ein Dehnstoffelement 3 temperaturabhängig betätigt ist, wobei das Dehnstoffelement 3 über einen in einer Mischkammer 4 aus/einfahrbar angeordneten Steuerstift 5 - wie dies aus den unterschiedlichen Schnittdarstellungen in Figur 1 hervorgeht - mit dem Hauptventil 2 in Hubantriebsverbindung steht.

Wie die Figur 1 weiter zeigt, ist das Dehnstoffelement 3 über eine einen Dehnstoff 6 bevorratende Kapsel 7 gegen ein Widerlager 8 in einem kalt- bzw. kühlerrücklaufseitigen Anschlußstutzen 9 des Thermostatventils 1 fest abgestützt, wobei die bei geschlossenem Hauptventil 2 kaltseitig überstehende, das Hauptventil 2 mit Bewegungsspiel durchsetzende Kapsel 7 einen im Dehnstoff 6 plazierten elektrischen Schichtwiderstand 10 als Heizelement 11 umfaßt. Dieser Schichtwiderstand 10 in der durch eine Kunststoffkappe 12 wärmeisoliert gegen das kalt beaufschlagte Widerlager 8 abgestützten Kapsel 7 ist über im Widerlager 8 angeordnete Anschlußleitungen 13 und 14 gesteuert/geregelt bestromt.

Um bei geschlossenem Hauptventil 2 des Thermostatventils 1 den Einfluß des im Anschlußstutzen 9 befindlichen kalten Kühlmittels auf die Erwärmung des Dehnstoffelementes 3 wesentlich zu minimieren, wird erfindungsgemäß vorgeschlagen, daß die Kapsel 7 einen den Dehnstoff 6 auf Höhe des geschlossenen Hauptventils 2 oder mischkammerseitig tiefer begrenzenden Abschluß 15 aufweist, an dem relativ zum Steuerstift 5 koaxial benachbart angeordnet ein ring- oder hülsenförmiges Heizelement 11 vorgesehen ist oder entsprechend Figur 2 über den Umfang des Steuerstiftes 5 benachbart verteilt vereinzelte Heizelemente 16 angeordnet sind.

Der Vorteil der Erfindung ist, daß bei einem hohen Temperaturniveau im Kühlmittel der Brennkraftmaschine, insbesondere nahe eines vorbestimmten Temperaturgrenzwertes, mit weniger elektrischer Heizleistung ein schnelles Öffnen des Hauptventils 2 des Thermostatventils 1 erreicht ist. Gemäß der Erfindung ist dies durch die Kombination eines in der Dehnstoff-Kapsel 7 gegenüber dem geschlossenen Hauptventil 2 in Richtung Mischkammer 4 abgesenkt vorgesehenen Dehnstoff-Spiegels in Verbindung mit einer Erwärmung des Dehnstoffes 6 in unmittelbarer Nähe des Steuerstiftes 5 erzielt. Das Thermostatventil 1 findet daher bevorzugt Anwendung bei einer Kennfeld-Kühlung.

In einer bevorzugten Ausgestaltung der Erfindung ist ein ringförmiges Heizelement 11 als Dickschichtwiderstand auf einer Traghülse 17 angeordnet, die am Abschluß 15 der Dehnstoff-Kapsel 7 angeordnet ist. Gemäß einer weiteren Ausgestaltung kann auf der Traghülse 17 ein Heizelement 11 mit Metallfolie vorgesehen sein.

Bei einer anderen Ausgestaltung sind vereinzelte, als Schichtwiderstände 10 gestaltete Heizelemente 16 an Armen 18 einer am Abschluß 15 der Dehnstoff-Kapsel 7 angeordneten Ronde 19 vorgesehen.

Eine weitere Möglichkeit der Ausbildung eines hülsenförmigen Heizelementes 11 ergibt sich dadurch, daß die Traghülse 17 oder die Arme 18 der Ronde 19 jeweils aus einem bei Bestromung sich erwärmenden Material gebildet sind.

Schließlich ist zur weiteren Verkürzung der Regeltotzeit des Dehnstoffelementes 3 dessen Dehnstoff 6 mit einem die Wärmeleitung steigernden Pulver, z.B. Alu-Pulver, versetzt.

Abschließend sei noch darauf hingewiesen, daß mit der Erfindung in vorteilhafter Weise eine bessere Dynamik des Thermostaten beim Bestromen erzielt ist mit dem Vorteil geringerer Zündwinkelkorrekturen. Weiter läßt sich eine größere Temperaturspreizung zwischen oberem und unterem Temperatur-Niveau verwirklichen, schließlich ist der Strömungswiderstand auf der Kaltwasserseite durch einen kleineren Isolationskörper im Bereich der Dehnstoffelement-Abstützung an dem kaltwasserseitigen Widerlager reduziert.

## Patentansprüche

1. Thermostatventil (1), für einen kühlkreislauf einer Brennkraftmaschine,
- bei dem ein einerseits kalt und andererseits heiß beaufschlagtes Hauptventil (2) temperaturabhängig betätigbar ist über ein Dehnstoffelement (3), das
- über einen heiß- bzw. mischkammerseitig aus-/einfahrbar angeordneten Steuerstift (5) mit dem Hauptventil (2) in Hubantriebsverbindung steht, und das
- andererseits über eine einen Dehnstoff (6) bevorratende Kapsel (7) gegen ein Widerlager (8) in einem kalt- bzw. kühlerrücklaufseitigen Anschlußstutzen (9) des Thermostatventils (1) fest abgestützt ist, und
- daß die bei geschlossenem Hauptventil (2) kaltseitig überstehende, das Hauptventil (2) mit Bewegungsspiel durchsetzende Kapsel (7) einen im Dehnstoff (6) plazierten elektrischen Schichtwiderstand (10) als Heizelement (11) umfaßt, wobei
- der Schichtwiderstand (10) in der wärmeisoliert gegen das kalt beaufschlagte Widerlager (8) abgestützten Kapsel (7) über im Widerlager (8) angeordnete Anschlußleitungen (13, 14) gesteuert/geregelt bestromt ist,
**dadurch gekennzeichnet,**
- **daß** die Kapsel (7) einen den Dehnstoff (6) auf Höhe des geschlossenen Hauptventils (2) oder mischkammerseitig tiefer begrenzenden Abschluß (15) aufweist, an dem
- relativ zum Steuerstift (5) koaxial benachbart angeordnet ein ringoder hülsenförmiges Heizelement (11) vorgesehen ist oder über den Umfang des Steuerstiftes (5) benachbart verteilt vereinzelte Heizelemente (16) angeordnet sind.

2. Thermostatventil nach Anspruch 1, **dadurch gekennzeichnet, daß** die Heizelemente (11, 16) als Dickschichtwiderstände (10) auf einer Traghülse (17) angeordnet sind.

3. Thermostatventil nach Anspruch 2, **dadurch gekennzeichnet, daß** auf der Traghülse (17) ein Heizelement (11) mit Metallfolie angeordnet ist.

4. Thermostatventil nach Anspruch 1 und 2, **dadurch gekennzeichnet, daß** die vereinzelten Heizelemente (16) an Armen (18) einer am Abschluß (15) der Dehnstoff-Kapsel (7) angeordneten Ronde (19) vorgesehen sind.

5. Thermostatventil nach Anspruch 2, 3 oder 4, **dadurch gekennzeichnet, daß** die Traghülse (17) bzw. die Arme (18) der Ronde (19) jeweils aus einem bei Bestromung sich erwärmenden Material gebildet sind.

6. Thermostatventil nach einem der Ansprüche 1 bis 5, **dadurch gekennzeichnet, daß** der Dehnstoff (6) mit einem die Wärmeleitung steigernden Pulver, zum Beispiel Alu-Pulver, versetzt ist.

## Claims

1. A thermostat valve (1) for a cooling circuit of an internal combustion engine,
- wherein a main valve (2) subjected to cold on one side and heat on the other side can be actuated in dependence on temperature via an expandable-material element (3), which
- is in reciprocating driving connection with the main valve (2) via a control pin (5) extendable and retractable on the hot or mixing-chamber side and
- on the other side, via a capsule (7) storing an expandable material (6), the expandable-material element is tightly braced against an abutment (8) in a connecting nozzle (9) of the thermostat valve (1) on the cold or radiator return flow side. and
- the capsule (7), which projects on the cold side when the main valve (2) is closed and extends through the main valve (2) with motion clearance, comprises a heating element (11) in the form of an electric layer resistor (10) placed in the expandable material (6),
wherein
- the layer resistor (10) in the capsule (7), which is heat-insulated and braced against the abutment (8) exposed to cold, is subjected to a current under open-loop or closed-loop control via connecting lines (13, 14) disposed in the abutment (8),
**characterised in that**
- the capsule (7) has a cover (15) which bounds the expandable material (6) lower down at the level of the closed main valve (2) or on the mixing-chamber side, and
- an annular or sleeve-like heating element (11) is disposed near and coaxial with the control pin (5), or individual heating elements (16) are disposed nearby around the periphery of the control pin (5).

2. A thermostat valve according to claim 1, **characterised in that** the heating elements (11, 16) are thick-layer resistors (10) disposed on a bearing sleeve (17).

3. A thermostat valve according to claim 2, **characterised in that** a heating element (11) with metal foil is disposed on the bearing sleeve (17).

4. A thermostat valve according to claims 1 and 2, **characterised in that** the individual heating elements (16) are provided on arms (18) of a round plate (19) disposed on the cover (15) of the expandable-material capsule (7).

5. A thermostat valve according to claim 2, 3 or 4, **characterised in that** the bearing sleeve (17) or the arms (18) of the round plate (19) are made of material which heats up in a flow.

6. A thermostat valve according to any of claims 1 to 5, **characterised in that** the expandable material (6) is mixed with a powder, e.g. aluminium powder, which increases the thermal conductivity.

## Revendications

1. Soupape thermostatique montée dans le circuit de refroidissement d'un moteur à combustion interne, dans laquelle
- une soupape principale (2) soumise d'un côté au froid, de l'autre côté au chaud, peut être actionnée en fonction de la température par un élément à matériau de dilatation (3) qui
- est en liaison d'entraînement de levée avec la soupape principale (2), par l'intermédiaire d'une tige de commande (5) montée de manière à pouvoir se déplacer vers le chaud ou vers la chambre de mélange,
- une capsule (7) contenant un matériau de dilatation (6) est en appui fixe sur un palier (8) monté dans une tubulure de raccordement (9) de la soupape thermostatique (1), du côté froid c'est-à-dire du côté retour de radiateur, et
- quand la soupape principale (2) est fermée, la capsule (7) qui traverse avec du jeu de déplacement la soupape principale (2) pour la dépasser du côté froid, entoure une résistance électrique à couche (10) placée comme élément chauffant (11) dans le matériau de dilatation (6), et
- la résistance à couche (10) logée dans la capsule (7) isolée thermiquement et en appui sur le palier (8) soumis au froid reçoit un courant de commande et de réglage amené par des conducteurs de raccordement (13, 14) montés dans le palier (8),
**caractérisée en ce que**
- la capsule (7) présente un obturateur (15) délimitant plus bas le matériau de dilatation (6) sur la hauteur de la soupape principale (2) fermée ou du côté de la chambre de mélange, et
- sur l'obturateur (15) et coaxialement à proximité de la tige de commande (5), il est prévu un élément chauffant en forme d'anneau ou de douille, ou des éléments chauffants individuels (16) rapprochés sont repartis à la périphérie prés de la tige de commande (5).

2. Soupape thermostatique selon la revendication 1,
**caractérisée en ce que**
les éléments chauffants (11, 16) sont des résistances à couche épaisse (10) montées sur un douille porteuse (17).

3. Soupape thermostatique selon la revendication 2,
**caractérisée en ce que**
sur la douille porteuse (17) est monté un élément chauffant (11) à feuille métallique.

4. Soupape thermostatique selon la revendication 1 ou 2,
**caractérisée en ce que**
les éléments chauffants individuels (16) sont prévus sur les bras (18) d'une pièce ronde (19) montée sur l'obturateur (15) de la capsule (7).

5. Soupape thermostatique selon la revendication 2, 3 ou 4,
**caractérisée en ce que**
la douille porteuse (17) ou les bras (18) de la pièce ronde (19) sont faits d'un matériau qui s'échauffe quand il est traversé par un courant électrique.

6. Soupape thermostatique selon une des revendications 1 à 5,
**caractérisée en ce que**
le matériau de dilatation (6) est mélangé à une poudre conductrice de la chaleur, une poudre d'aluminium par exemple.
